# EUROPÄISCHE PATENTSCHRIFT

(11) **EP 3 308 858 B1**
(45) Veröffentlichungstag und Bekanntmachung des Hinweises auf die Patenterteilung: **25.12.2019**
(21) Anmeldenummer: 16193632.3
(22) Anmeldetag: 13.10.2016
(51) Int. Cl.: B01J 47/028, B01J 49/00, C02F 1/42, C02F 103/02

(54) **VORRICHTUNG ZUM ENTSALZEN VON WASSER**
DEVICE FOR DESALINATING WATER
DISPOSITIF DE DÉSALINISATION DE L'EAU

(43) Veröffentlichungstag der Anmeldung: 18.04.2018
(73) Patentinhaber: OAV Objekte und Anlagen Vermietung GmbH, 2120 Wolkersdorf (AT)
(72) Erfinder: KOMAREK, Ernst, 1220 Wien (AT)
(74) Vertreter: Puchberger & Partner Patentanwälte

(56) Entgegenhaltungen:
- WO-A1-2015/158406
- WO-A2-2007/092109
- AT-U1- 1 373
- US-A- 2 539 221
- US-A1- 2005 103 721

## Beschreibung

Die Erfindung betrifft eine Vorrichtung zum Aufbereiten von Wasser durch Entsalzen gemäß Oberbegriff des unabhängigen Patentanspruchs.

Die erfindungsgemäße Vorrichtung dient insbesondere der Aufbereitung von Wasser zu demineralisiertem, deionisiertem bzw. vollentsalztem Wasser, das auch als Deionat bezeichnet wird. Derart aufbereitetes Wasser kommt bevorzugt als Betriebsstoff in technischen Anwendungen zum Einsatz, beispielsweise als Brauchwasser von Elektroerosionsmaschinen, als Wärmeträger im Kühlmittelkreislauf eines Kraftwerks oder beispielsweise auch als Lösungs- oder Reinigungsmittel.

Demineralisiertes Wasser wird gemäß Stand der Technik durch lonenaustausch oder Adsorption aus Brauch- oder aus Trinkwasser gewonnen. Eine andere Methode ist die Gewinnung aus Brauchwasser durch vorgeschaltete Umkehrosmose mit einer nachgeschalteten Restentsalzung über einen Mischbettfilter.

Die Erfindung betrifft insbesondere ein Gerät zur Wasseraufbereitung, wie es in der Gebrauchsmusterschrift AT 001373 U1 offenbart ist. Bei diesem Gerät ist jedoch ein verhältnismäßig komplex aufgebauter Kopf vorgesehen, der durch mehrere Elemente, wie beispielsweise Rohrleitungen, Abdeckungen, Befestigungselemente, und Trägerelemente, gebildet ist.

Aufgabe der Erfindung ist es nun, die Konstruktion bekannter Geräte zum Entsalzen von Wasser zu verbessern. Insbesondere ist es Aufgabe der Erfindung eine Konstruktion vorzusehen, bei der der Aufbau und die Handhabung vereinfacht sind.

Die erfindungsgemäße Aufgabe wird insbesondere durch die Merkmale des unabhängigen Patentanspruchs gelöst.

Die Erfindung betrifft eine Vorrichtung zum Entsalzen von Wasser, bei der in einem mobilen Gehäuse folgende Komponenten vorgesehen sind:
- eine erste lonentauschersäule,
- eine zweite lonentauschersäule,
- eine Zuleitung zur Zuführung des zu entsalzenden Wassers, wobei die Zuleitung einerseits in die erste lonentauschersäule mündet und wobei die Zuleitung andererseits bis an die Außenseite des Gehäuses geführt ist,
- eine Ableitung zur Ableitung des entsalzten Wassers, wobei die Ableitung einerseits in die zweite lonentauschersäule mündet und wobei die Ableitung andererseits bis an die Außenseite des Gehäuses geführt ist,
- ein erster Abschnitt einer Verbindungsleitung, wobei der erste Abschnitt der Verbindungsleitung einerseits in die erste lonentauschersäule mündet und wobei der erste Abschnitt der Verbindungsleitung andererseits bis an die Außenseite des Gehäuses geführt ist,
- und ein zweiter Abschnitt der Verbindungsleitung, wobei der zweite Abschnitt der Verbindungsleitung einerseits in die zweite lonentauschersäule mündet und wobei der zweite Abschnitt der Verbindungsleitung andererseits bis an die Außenseite des Gehäuses geführt ist,
- wobei die Vorrichtung eine Brücke zur, bevorzugt dichten, seriellen Verbindung der ersten lonentauschersäule mit der zweiten lonentauschersäule umfasst, durch die die an die Außenseite des Gehäuses geführten Abschnitte der Verbindungsleitung fluidtechnisch verbunden oder verbindbar sind.

Erfindungsgemäß ist vorgesehen, dass eine Trägerplatte vorgesehen ist, in der die Zuleitung, die Ableitung, der erste Abschnitt der Verbindungsleitung und der zweite Abschnitt der Verbindungsleitung verlaufen.

Erfindungsgemäß ist vorgesehen, dass die Trägerplatte einen massiven, einstückigen, Plattenkörper umfasst, der durch Kanäle zur Bildung der Zuleitung, der Ableitung, des ersten Abschnitts der Verbindungsleitung und des zweiten Abschnitts der Verbindungsleitung durchsetzt ist.

Gegebenenfalls ist vorgesehen, dass die Kanäle zur Bildung der Zuleitung, der Ableitung, des ersten Abschnitts der Verbindungsleitung und des zweiten Abschnitts der Verbindungsleitung als Bohrungen und/oder als eingegossene Leitungen ausgebildet sind.

Gegebenenfalls ist vorgesehen, dass die Zuleitung, die Ableitung, der erste Abschnitt der Verbindungsleitung und der zweite Abschnitt der Verbindungsleitung nebeneinander an einer Seite der Trägerplatte, insbesondere an einer Stirnseite der Trägerplatte, an die Außenseite des Gehäuses geführt sind und dort aus dem Gehäuse und aus der Trägerplatte austreten.

Gegebenenfalls ist vorgesehen, dass die Brücke ein entfernbarer Verbindungsteil ist, der entfernbar mit dem ersten Abschnitt der Verbindungsleitung und mit dem zweiten Abschnitt der Verbindungsleitung dichtend verbunden oder verbindbar ist.

Gegebenenfalls ist vorgesehen, dass die Brücke verschiebbar mit dem ersten Abschnitt der Verbindungsleitung und mit dem zweiten Abschnitt der Verbindungsleitung verbunden und insbesondere dichtend verbunden ist.

Gegebenenfalls ist vorgesehen, dass die Brücke verschiebbar mit dem ersten Abschnitt der Verbindungsleitung und mit dem zweiten Abschnitt der Verbindungsleitung verbunden und insbesondere dichtend verbunden ist und dass ein Federelement vorgesehen ist, das der Verschiebung der Brücke entgegenwirkt.

Gegebenenfalls ist vorgesehen, dass die verschiebbar angeordnete Brücke als Druckminderer und/oder als Volumenausgleichselement wirkt und ausgebildet ist.

Gegebenenfalls ist vorgesehen,
- dass die Brücke dichtend verschiebbar mit dem ersten Abschnitt der Verbindungsleitung und mit dem zweiten Abschnitt der Verbindungsleitung verbunden ist,
- dass die Brücke eine eingefahrene Stellung aufweist,
- dass die Brücke eine ausgefahrene Stellung aufweist, in der die Brücke von der eingefahrenen Stellung nach außen bewegt ist,
- und dass das von dem ersten Abschnitt der Verbindungsleitung, dem zweiten Abschnitt der Verbindungsleitung und der Brücke begrenzte oder definierte Volumen in der ausgefahrenen Stellung größer ist als in der eingefahrenen Stellung.

Gegebenenfalls ist vorgesehen,
- dass zur Zuleitung des Wassers in die erste lonentauschersäule ein erster Verteilerkopf vorgesehen ist,
- dass zur Ableitung des Wassers aus der ersten lonentauschersäule ein erster Sammelkopf vorgesehen ist,
- dass zur Zuleitung des Wassers in die zweite lonentauschersäule ein zweiter Verteilerkopf vorgesehen ist,
- und dass zur Ableitung des Wassers aus der zweiten lonentauschersäule ein zweiter Sammelkopf vorgesehen ist.

Gegebenenfalls ist vorgesehen, dass der erste Sammelkopf, der zweite Sammelkopf, der erste Verteilerkopf und der zweite Verteilerkopf an der Trägerplatte gehaltert, und gegebenenfalls über eine Lanze an der Trägerplatte gehaltert sind.

Gegebenenfalls ist vorgesehen,
- dass der erste Sammelkopf und der erste Verteilerkopf der ersten lonentauschersäule über eine erste Lanze voneinander beabstandet sind
   und/oder
- dass der zweite Sammelkopf und der zweite Verteilerkopf der zweiten lonentauschersäule über eine zweite Lanze voneinander beabstandet sind.

Gegebenenfalls ist vorgesehen, dass die Trägerplatte die erste lonentauschersäule und die zweite lonentauschersäule mit Ausnahme der Zuleitungen, der Verbindungsleitung und der Ableitungen einseitig dichtend verschließt.

Gegebenenfalls ist vorgesehen, dass eine Basisplatte vorgesehen ist, die die erste lonentauschersäule und die zweite lonentauschersäule einseitig dichtend verschließt, wobei in der Basisplatte verschließbare Öffnungen zur Öffnung der lonentauschersäulen nach außen vorgesehen sind.

Gegebenenfalls ist vorgesehen, dass eine Abdeckung zur Abdeckung der Trägerplatte vorgesehen ist, wobei in der Abdeckung Freistellungen zum Anschluss einer Leitung an die Zuleitung und zum Anschluss einer Leitung an die Ableitung vorgesehen sind.

Die Vorrichtung dient insbesondere zur Aufbereitung von Wasser, das als Brauchwasser von Elektroerosionsmaschinen verwendet werden kann. Für den Betrieb von Elektroerosionsmaschinen ist es notwendig, dass das im Prozess eingesetzte Wasser einen möglichst geringen Leitwert besitzt. Zu diesem Zweck umfasst die Vorrichtung ein mobiles Gehäuse, das einfach transportiert werden kann und das einfach zwischen einer Wasserzuleitung und der Elektroerosionsmaschine vorgesehen werden kann.

Zur Aufbereitung des Wassers umfasst die Vorrichtung zwei lonentauschersäulen, wobei eine lonentauschersäule beispielsweise ein Kationentauschmittel, insbesondere einen Kationentauscher oder Kationenadsorber und die andere lonentauschersäule beispielsweise ein Anionentauschmittel, insbesondere einen Anionentauscher oder Anionenadsorber enthält. Die in den lonentauschersäulen vorgesehenen Mittel müssen nach einer bestimmten Betriebsdauer regeneriert, reaktiviert, konditioniert und/oder getauscht werden. Hierzu kann die Vorrichtung, begünstigt durch das mobile Gehäuse, einfach durch eine bereits regenerierte oder neue Vorrichtung ersetzt werden, wobei die zuvor verwendete Vorrichtung zur Regeneration einfach an einen anderen Ort transportiert werden kann.

Insbesondere für den Transport und die oftmalige Wiederverwendung der Vorrichtung ist es notwendig, dass die Vorrichtung robust und dennoch leicht und mobil ausgebildet ist. Diese Eigenschaften werden durch die erfindungsgemäßen Merkmale ermöglicht.

Bevorzugt ist vorgesehen, dass die beiden lonentauschersäulen in einem gemeinsamen, dicht verschlossenen Gehäuse angeordnet sind, wobei aus dem Gehäuse eine Zuleitung und eine Ableitung dicht herausgeführt sind, wobei insbesondere die Anschlüsse für die Zuleitung und die Ableitung jeder Säule dicht herausgeführt sind. Bei dem Betrieb der Vorrichtung wird die zu behandelnde Flüssigkeit über die Zuleitung in die erste lonentauschersäule eingebracht, die beispielsweise als Kationensäule ausgebildet ist. Die im Wesentlichen von Kationen befreite Flüssigkeit gelangt in weiterer Folge über eine Verbindungsleitung, die bevorzugt durch eine Brücke geschlossen ist, in die zweite lonentauschersäule, die bevorzugt als Anionensäule ausgebildet ist. Das nun auch im Wesentlichen von Anionen und Kationen befreite Wasser wird in weiterer Folge über die Ableitung aus der Vorrichtung abgeführt und kann beispielsweise einer Elektroerosionsmaschine zugeführt werden.

Wenn die lonentauschermittel, insbesondere die lonertauscher oder lonenadsorber, aufgrund ihrer Beladung mit Kationen bzw. Anionen regeneriert werden müssen, kann die Vorrichtung abgeschlossen und zur Regenerationsstelle transportiert werden.

Bei der Regeneration wird die Brücke bevorzugt entfernt, sodass die beiden lonentauschersäulen voneinander getrennt werden. In weiterer Folge können die beiden lonentauschersäulen unabhängig voneinander regeneriert, insbesondere befüllt bzw. durchströmt werden. Zusätzlich kann vorgesehen sein, dass die lonentauschersäulen jeweils eine verschließbare Öffnung zur Entleerung aufweisen.

Gegebenenfalls ist vorgesehen, dass im Gehäuse und/oder in der Trägerplatte eine Ausnehmung bzw. eine Freistellung zur Aufnahme der Brücke vorgesehen ist. In ihrer eingefahrenen Stellung kann dadurch die Brücke in der Freistellung der Trägerplatte angeordnet sein. Gegebenenfalls ist diese Freistellung derart ausgebildet, dass die Brücke in ihrer ausgefahrenen Stellung aus der Freistellung ragt. Dadurch kann beispielsweise ein optischer Indikator gebildet sein, der Aufschluss darüber gibt, ob es zu einer Druckausdehnung gekommen ist. Gegebenenfalls können in allen Ausführungsformen entlang des Verlaufs der Zuleitung, der Ableitung oder der Verbindungsleitung weitere Komponenten vorgesehen sein. Derartige Komponenten können beispielsweise Filter, Drosseln, Krümmer, Düsen oder andere Komponenten sein. Im Sinne der Erfindung erstrecken sich die Leitungen, insbesondere die Zuleitung, die Ableitung und/oder die Verbindungsleitung, trotz einer gegebenenfalls entlang ihres Verlaufs angeordneten Komponente, derart durch die Vorrichtung, dass das zu entsalzende Wasser von außen zur ersten lonentauschersäule, weiter zur zweiten lonentauschersäule und wieder aus der Vorrichtung geleitet wird.

Gemäß einer bevorzugten Ausführungsform umfassen die Zuleitung, die Ableitung, der erste Abschnitt der Verbindungsleitung und/oder der zweite Abschnitt der Verbindungsleitung jeweils einen geradlinigen, der Längserstreckungsrichtung der Trägerplatte folgenden Abschnitt. Dieser Abschnitt kann beispielsweise jeweils als Bohrung ausgebildet sein. Ferner können die genannten Leitungen einen quer zur Längserstreckungsrichtung der Trägerplatte verlaufenden Abschnitt umfassen, der mit jeweils einem der geradlinigen Abschnitte verbunden ist. Dadurch ist ein Krümmer gebildet. Bevorzugt verlaufen die lonentauschersäulen quer zur Längserstreckungsrichtung der Trägerplatte. Bevorzugt verlaufen die lonentauschersäulen parallel zueinander.

Gemäß einer bevorzugten Ausführungsform ist vorgesehen, dass die beiden lonentauschersäulen im Wesentlichen vertikal verlaufende, aufrechte Behältnisse sind, die in vertikaler Richtung durchströmt werden. Verschlossen sind die Behältnisse im oberen Bereich bevorzugt durch die Trägerplatte und im unteren Bereich bevorzugt durch die Basisplatte.

Bevorzugt ist vorgesehen, dass das Gehäuse als mobiles, dicht verschlossenes Gehäuse ausgebildet ist. Dies ermöglicht einen einfachen Transport, beispielsweise von oder zur Regenerationsstelle. Durch einfaches Verschließen der Zuleitung und der Ableitung ist die gesamte Vorrichtung leicht abdichtbar oder abgedichtet, wodurch auch beim Transport keine Flüssigkeit oder kein lonentauschermittel austreten kann.

Bevorzugt ist vorgesehen, dass durch Entfernen einer Abdeckung und weiters durch Entfernen der Brücke die beiden lonentauschersäulen unabhängig voneinander regeneriert werden können. Insbesondere weisen beide lonentauschersäulen bei entfernter Brücke jeweils eine Zuleitung und eine Ableitung auf. Die Ableitung der ersten lonentauschersäule ist bei entfernter Brücke der erste Abschnitt der Verbindungsleitung. Die Zuleitung der zweiten lonentauschersäule ist bei entfernter Brücke der zweite Abschnitt der Verbindungsleitung.

Bevorzugt weist die Vorrichtung an ihrer Unterseite eine Gleitfläche auf, die einen vereinfachten Transport ermöglicht. Beispielsweise kann diese Gleitfläche Gleitschienen oder Räder umfassen.

Gegebenenfalls ist vorgesehen, dass das Federelement ein Kunststoffelement ist oder aus Kunststoff gebildet ist.

Bevorzugt sind alle wasserführenden Teile Kunststoffteile oder zumindest korrosionsbeständige Teile.

Bevorzugt ist die Brücke aus Polyvinylchlorid PVC gebildet. Bevorzugt ist das Federelement, insbesondere das als Plättchen ausgeführte Federelement, aus Polyethylen PE gebildet.

Die Trägerplatte ist bevorzugt aus einem festen Kunststoff, beispielsweise aus High-Density Polyethylen "HDPE", gebildet. Die Abdeckung kann beispielsweise aus einem festen Kunststoff, wie Acrylnitril-Butadien-Styrol "ABS", gebildet sein. Auch die Basisplatte kann beispielsweise aus Acrylnitril-Butadien-Styrol "ABS" gebildet sein.

Bevorzugt ist das Gehäuse aus Kunststoff gebildet und umfasst insbesondere einen oder mehrere Kunststoffe, die miteinander verschweißbar und/oder verklebbar sind. Dadurch kann ein dichtes Gehäuse gebildet werden.

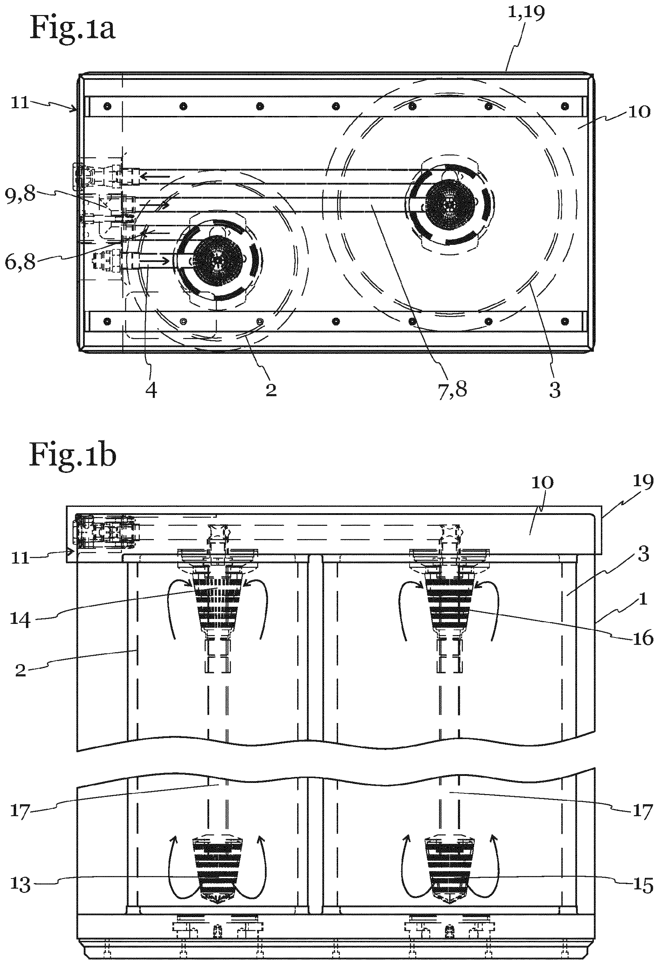

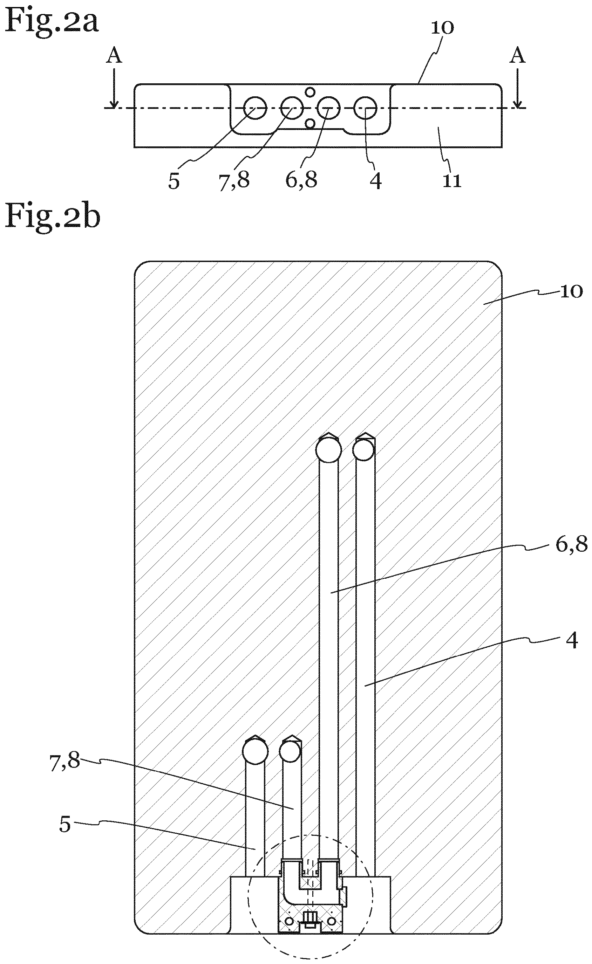

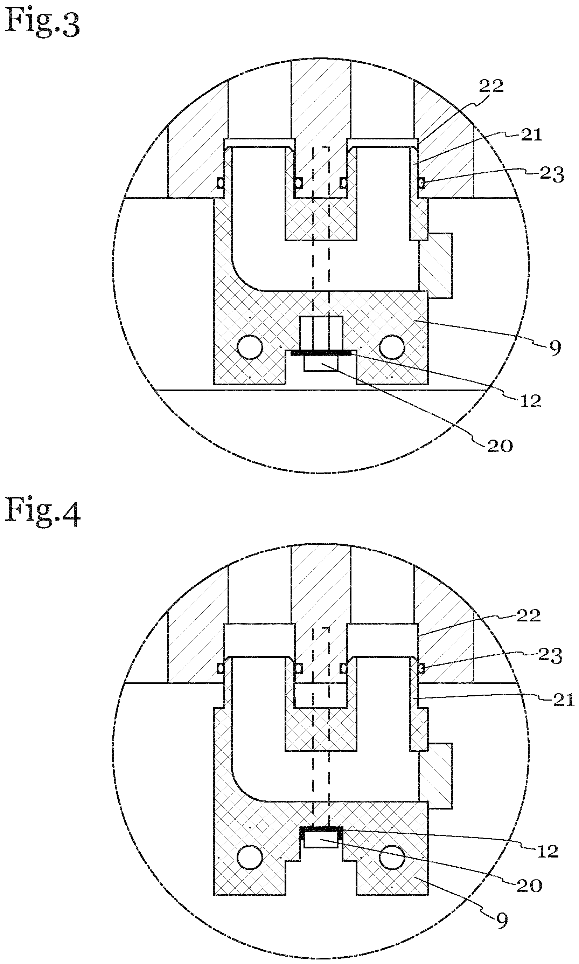

In weiterer Folge wird die Erfindung anhand exemplarischer Ausführungsformen bzw. anhand exemplarischer Figuren weiter beschrieben, wobei Fig. 1a eine schematische Aufsicht auf eine erfindungsgemäße Vorrichtung mit einer schematischen Darstellung der verdeckten Komponenten, Fig. 1b eine schematische Seitenansicht mit einer schematischen Darstellung der verdeckten Komponenten, Fig. 2a eine Aufsicht auf die Stirnseite der Trägerplatte, Fig. 2b eine Schnittdarstellung gemäß der Schnittlinie A-A der Fig. 2a, Fig. 3 ein Detail des Ausschnitts aus Fig. 2b, wobei sich die Brücke in einer eingefahrenen Stellung befindet und Fig. 4 dasselbe Detail wie Fig. 3, wobei sich die Brücke jedoch in einer ausgefahrenen Stellung befindet, zeigen.

Wenn nicht anders angegeben, so entsprechen die in den Figuren angegebenen Bezugszeichen folgenden Komponenten:
Gehäuse 1, erste lonentauschersäule 2, zweite lonentauschersäule 3, Zuleitung 4, Ableitung 5, erster Abschnitt (der Verbindungsleitung) 6, zweiter Abschnitt (der Verbindungsleitung) 7, Verbindungsleitung 8, Brücke 9, Trägerplatte 10, Stirnseite (der Trägerplatte) 11, Federelement 12, erster Verteilerkopf 13, erster Sammelkopf 14, zweiter Verteilerkopf 15, zweiter Sammelkopf 16, Lanze 17, Basisplatte 18, Abdeckung 19, Befestigungsmittel 20, Leitungsfortsatz 21, Leitungsmuffe 22, Dichtung 23.

Fig. 1a zeigt eine schematische Aufsicht auf eine erfindungsgemäße Vorrichtung. Die strichlierten Linien stellen Komponenten dar, die durch das Gehäuse 1 bzw. eine Abdeckung 19 verdeckt sind.

In dem Gehäuse 1 sind zwei lonentauschersäulen, insbesondere eine erste lonentauschersäule 2 und eine zweite lonentauschersäule 3, vorgesehen. Ferner umfasst die Vorrichtung eine Zuleitung 4, die einerseits in die erste lonentauschersäule 2 mündet und andererseits bis an die Außenseite des Gehäuses 1 geführt ist, wodurch die Zuleitung 4 nach außen geöffnet ausgebildet ist, sodass eine Leitung zur Zuführung des Wassers angeschlossen werden kann. Gegebenenfalls ist der äußere Abschnitt der Zuleitung 4 durch ein Anschlussmittel wie beispielsweise eine Muffe gebildet. Ferner umfasst die Vorrichtung eine Verbindungsleitung 8, die zur Verbindung der ersten lonentauschersäule 2 mit der zweiten lonentauschersäule 3 eingerichtet ist. Die Verbindungsleitung 8 umfasst einen ersten Abschnitt 6 und einen zweiten Abschnitt 7. Der erste Abschnitt 6 mündet einerseits in die erste lonentauschersäule 2 und ist auf der anderen Seite an die Außenseite des Gehäuses 1 geführt. Der zweite Abschnitt 7 der Verbindungsleitung 8 mündet einerseits in die zweite lonentauschersäule 3 und ist auf der anderen Seite an die Außenseite des Gehäuses 1 geführt. Zur Verbindung der beiden Abschnitte 6, 7 der Verbindungsleitung 8 und insbesondere zur Verbindung der ersten lonentauschersäule 2 mit der zweiten lonentauschersäule 3 ist eine Brücke 9 vorgesehen. Die Brücke 9 ermöglicht eine Fluidverbindung der beiden Abschnitte 6, 7.

Die Zuleitung 4, die Ableitung 5, sowie die beiden Abschnitte 6, 7 der Verbindungsleitung 8 verlaufen in der Trägerplatte 10. Die Trägerplatte 10 ist gemäß der vorliegenden Ausführungsform als Platte ausgebildet, in der sich die Leitungen von den entsprechenden Stellen bis an die Außenseite der Trägerplatte 10 und dadurch auch an die Außenseite des Gehäuses 1 erstrecken. Insbesondere sind die Leitungen 4, 5, 8 an der Stirnseite 11 der Trägerplatte 10 geführt und treten dort aus der Trägerplatte 10 und/oder aus dem Gehäuse 1 aus. Dadurch kann der Anschluss, die Montage und die Regeneration in vorteilhafter Weise einfach von einer Seite der Vorrichtung erfolgen. Das Gehäuse 1 ist bevorzugt mit Ausnahme der durchgeführten Leitungen einseitig von der Trägerplatte 10 begrenzt und, insbesondere dichtend, verschlossen. Ferner umfasst das Gehäuse 1 auch eine Basisplatte 18. Diese Basisplatte 18 begrenzt das Gehäuse 1 ebenfalls einseitig und insbesondere dichtend.

Zur Beeinflussung der Strömungsverhältnisse in der Vorrichtung sind ein erster Verteilerkopf 13, ein erster Sammelkopf 14, ein zweiter Verteilerkopf 15 und zweiter Sammelkopf 16 vorgesehen. Der erste Verteilerkopf 13 und der erste Sammelkopf 14 sind in der ersten lonentauschersäule 2 vorgesehen. Das zu entsalzende und/oder aufzubereitende Wasser wird über die Zuleitung 4 in den ersten Verteilerkopf 13 geleitet, durch den das Wasser verteilt austritt. In weiterer Folge durchströmt das Wasser die erste lonentauschersäule 2 und wird durch den ersten Sammelkopf 14 abgeleitet. Zur Beabstandung des ersten Verteilerkopfs 13 vom ersten Sammelkopf 14 ist eine Lanze 17 vorgesehen. In der vorliegenden Ausführungsform wird das Wasser durch die Lanze 17 in den unteren Bereich der ersten lonentauschersäule 2 geleitet, wo es durch den ersten Verteilerkopf 13 austritt, gegen die Schwerkraft die gesamte erste lonentauschersäule 2 durchströmt und im oberen Bereich durch einen ersten Sammelkopf 14 abgeleitet wird. Angeschlossen an den ersten Sammelkopf 14 ist die Verbindungsleitung 8, über die das Wasser zur zweiten lonentauschersäule 3 geleitet wird. Diese zweite lonentauschersäule 3 kann, wie in der vorliegenden Ausführungsform, analog zur ersten lonentauschersäule 2 ausgebildet sein, wobei wiederum an einer Lanze 17 ein untenliegender zweiter Verteilerkopf 15 und ein obenliegender zweiter Sammelkopf 16 vorgesehen sind.

Die Verteilerköpfe 13 und 15 sowie die Sammelköpfe 14 und 16 sind an der Trägerplatte 10 gehaltert. Insbesondere sind die Verteilerköpfe 13,15 und/oder die Sammelköpfe 14, 16 über die Lanze 17 an der Trägerplatte 10 gehaltert.

Bevorzugt geschieht die Halterung über eine stoffschlüssige Verbindung, wie beispielsweise über eine Schweißverbindung oder über eine Klebeverbindung, und/oder über form- oder kraftschlüssige Verbindungen, wie beispielsweise über einen Bajonettverschluss oder über eine Schraubverbindung.

Fig. 2a zeigt eine Aufsicht auf die Stirnseite 11 der Trägerplatte 10. In diesem Bereich treten die Zuleitung 4, die Ableitung 5, der erste Abschnitt 6 der Verbindungsleitung 8 und der zweite Abschnitt 7 der Verbindungsleitung 8 aus der Trägerplatte 10 aus. Über die Brücke 9, die in Fig. 2a ausgeblendet ist, kann die Verbindungsleitung 8 geschlossen werden.

Fig. 2b zeigt eine Schnittdarstellung gemäß Schnittlinie A-A der Fig. 2a. In der Trägerplatte 10 sind die Zuleitung 4, die Ableitung 5, der erste Abschnitt 6 der Verbindungsleitung 8 und der zweite Abschnitt 7 der Verbindungsleitung 8 vorgesehen. Beispielsweise sind diese Leitungen als Bohrungen in der Trägerplatte 10 oder als eingegossene Leitungen in der Trägerplatte 10 ausgebildet. In der vorliegenden Ausführungsform bildet die Trägerplatte10 die Zuleitung 4, die Ableitung 5, den ersten Abschnitt 6 der Verbindungsleitung 8 und den zweiten Abschnitt 7 der Verbindungsleitung 8. Die Verbindungsleitung 8 ist im Normalbetrieb durch eine Brücke 9 geschlossen, wodurch die erste lonentauschersäule 2 und die zweite lonentauschersäule 3 hintereinander geschalten sind.

Fig. 3 zeigt ein Detail aus Fig. 2b, wobei sich die Brücke 9 in ihrer eingefahrenen Stellung befindet. Die Verbindung der Brücke 9 mit den Abschnitten 6, 7 der Verbindungsleitung 8 geschieht bevorzugt über eine teleskopartige, dichtende Verbindung. Die Brücke 9 ist gegenüber der Trägerplatte 10 bzw. gegenüber der Verbindungsleitung 8 verschiebbar bzw. bewegbar angeordnet. Für eine derartige teleskopartige, dichtende Verbindung ragt beispielsweise ein Leitungsfortsatz 21 in eine Leitungsmuffe 22. Der Leitungsfortsatz 21 kann um eine gewisse Einstecktiefe entlang des Verlaufs der Leitung verschoben werden, ohne dass die Verbindung, insbesondere die dichtende Verbindung, getrennt wird. Bevorzugt ist eine Dichtung 23 vorgesehen, um die Dichtwirkung in dieser Verbindung zu verbessern. In Fig. 3 sind die beiden Leitungsfortsätze 21 weitestmöglich in die Leitungsmuffen 22 eingeschoben.

In Fig. 4 hingegen befindet sich die Brücke 9 in einer ausgefahrenen Stellung, in der die Leitungsfortsätze 21 um ein gewisses Maß nach außen verschoben sind, wobei die Leitungsfortsätze 21 noch immer in der Leitungsmuffe 22 eingesteckt sind. Auch in dieser ausgefahrenen Stellung ist eine dichtende Verbindung der Brücke 9 mit der Trägerplatte 10 und dadurch eine geschlossene Verbindungsleitung 8 gebildet.

Durch die Verschiebung der Brücke 9 von der eingefahrenen Stellung in die ausgefahrene Stellung kann das Leitungsvolumen der Verbindungsleitung 8 vergrößert werden. Diese Volumenvergrößerung kann beispielsweise zum Druckausgleich bzw. zur Druckbegrenzung dienen. Beispielsweise kann das Ausdehnungsvolumen auch zur Kompensation von Frostausdehnungen dienen.

Bevorzugt ist ein Federelement 12 vorgesehen, das einer Verschiebung der Brücke 9 entgegenwirkt. So kann das Federelement 12, wie in der vorliegenden Ausführungsform, beispielsweise als dünnes Plättchen ausgebildet sein, das sich bei einer Verlagerung der Brücke 9 elastisch, gegebenenfalls plastisch, verformt. Bevorzugt ist, wie in dieser Ausführungsform, ein Befestigungsmittel 20 vorgesehen. Dieses Befestigungsmittel 20 dient einerseits der Montage der Brücke 9 an der Trägerplatte 10 und andererseits auch, wie in der Stellung der Fig. 4 zu sehen ist, als Endanschlag, um eine vollständige Trennung der Brücke 9 von der Trägerplatte 10 zu verhindern. Das Befestigungsmittel 20 ist in der vorliegenden Ausführungsform als in die Trägerplatte 10 eingeschraubte Schraube ausgebildet. Zwischen dem eingeschraubten Abschnitt des Befestigungsmittels 20 und dem Kopf des Befestigungsmittels 20 ist die Brücke 9 vorgesehen. Die Brücke 9 umfasst eine Freistellung, in die der Kopf des Befestigungsmittels 20 eingeführt werden kann, wenn die Federkraft des Federelements überwunden wird. Zur Abstützung des Federelements 12 ist eine Schulter vorgesehen. Das Befestigungsmittel 20, insbesondere dessen Kopf, ist wiederum über das Federelement 12 an der Schulter der Brücke 9 abgestützt.

Bei einer Verlagerung der Brücke 9, beispielsweise durch Druckausdehnung, wird bei der vorliegenden Ausbildung, das Federelement 12 verformt und in die Freistellung der Brücke 9 hineingezogen, wodurch auch der Kopf des Befestigungsmittels 20 in die Freistellung eindringen kann, und die Brücke 9 in eine ausgefahrene Stellung wechseln kann.

Bevorzugt sind die Trägerplatte 10 und die Brücke 9 durch eine Abdeckung 19 abgedeckt. Diese Abdeckung 19 kann beispielsweise verformbar ausgebildet sein, sodass, wenn die Brücke 9 in ihre ausgefahrene Stellung wechselt, auch die Abdeckung 19 verformt wird. Dadurch kann von außen erkannt werden, dass es zu einer Druckausdehnung im Gehäuse 1 gekommen ist, was beispielsweise auf eine Fehlfunktion oder beispielsweise auch auf Frost hinweisen kann.

Eine exemplarische Ausgestaltung der Vorrichtung kann beispielsweise folgende technische Daten aufweisen:

**Hydraulische Leistung:**

| | |
|---|---|
| Max. Durchflussmenge | 30-60 l/min |
| Min. Durchflussmenge | 0,1-2 l/min |
| Max. Betriebsdruck | 4-6 bar |
| Max. Eingangsleitwert | etwa 2500 µs/cm1 |
| Leitwert | < 0,01 µs/cm1 |
| Zulässiger Eingangs pH-Wert | 6,5-9,5 |

**Abmaße:**

| | |
|---|---|
| Gewicht leer | 130 kg |
| Standard Gewicht inkl. Wasser | 150 kg |
| Abmaße mm (L/B/H) | 650/350/1200 |

## Patentansprüche

1. Vorrichtung zum Entsalzen von Wasser, bei der in einem mobilen Gehäuse (1) folgende Komponenten vorgesehen sind:
- eine erste lonentauschersäule (2),
- eine zweite lonentauschersäule (3),
- eine Zuleitung (4) zur Zuführung des zu entsalzenden Wassers, wobei die Zuleitung (4) einerseits in die erste lonentauschersäule (2) mündet und wobei die Zuleitung (4) andererseits bis an die Außenseite des Gehäuses (1) geführt ist,
- eine Ableitung (5) zur Ableitung des entsalzten Wassers, wobei die Ableitung (5) einerseits in die zweite lonentauschersäule (3) mündet und wobei die Ableitung (5) andererseits bis an die Außenseite des Gehäuses (1) geführt ist,
- ein erster Abschnitt (6) einer Verbindungsleitung (8), wobei der erste Abschnitt (6) der Verbindungsleitung (8) einerseits in die erste lonentauschersäule (2) mündet und wobei der erste Abschnitt (6) der Verbindungsleitung (8) andererseits bis an die Außenseite des Gehäuses (1) geführt ist,
- und ein zweiter Abschnitt (7) der Verbindungsleitung (8), wobei der zweite Abschnitt (7) der Verbindungsleitung (8) einerseits in die zweite lonentauschersäule (3) mündet und wobei der zweite Abschnitt (7) der Verbindungsleitung (8) andererseits bis an die Außenseite des Gehäuses (1) geführt ist,
- wobei die Vorrichtung eine Brücke (9) zur dichten, seriellen Verbindung der ersten lonentauschersäule (2) mit der zweiten lonentauschersäule (3) umfasst, durch die die an die Außenseite des Gehäuses (1) geführten Abschnitte (6, 7) der Verbindungsleitung (8) fluidtechnisch verbunden oder verbindbar sind, wobei eine Trägerplatte (10) vorgesehen ist, in der die Zuleitung (4), die Ableitung (5), der erste Abschnitt (6) der Verbindungsleitung (8) und der zweite Abschnitt (7) der Verbindungsleitung (8) verlaufen,
**dadurch gekennzeichnet, dass**
die Trägerplatte (10) einen massiven, einstückigen, Plattenkörper umfasst, der durch Kanäle zur Bildung der Zuleitung (4), der Ableitung (5), des ersten Abschnitts (6) der Verbindungsleitung (8) und des zweiten Abschnitts (7) der Verbindungsleitung (8) durchsetzt ist, und dass die Kanäle zur Bildung der Zuleitung (4), der Ableitung (5), des ersten Abschnitts (6) der Verbindungsleitung (8) und des zweiten Abschnitts (7) der Verbindungsleitung (8) als Bohrungen und/oder als eingegossene Leitungen ausgebildet sind.

2. Vorrichtung nach Anspruch 1, **dadurch gekennzeichnet, dass** die Zuleitung (4), die Ableitung (5), der erste Abschnitt (6) der Verbindungsleitung (8) und der zweite Abschnitt (7) der Verbindungsleitung (8) nebeneinander an einer Seite der Trägerplatte (10), insbesondere an einer Stirnseite (11) der Trägerplatte (10), an die Außenseite des Gehäuses (1) geführt sind und dort aus dem Gehäuse (1) und aus der Trägerplatte (10) austreten.

3. Vorrichtung nach Anspruch 1 oder 2, **dadurch gekennzeichnet, dass** die Brücke (9) ein entfernbarer Verbindungsteil ist, der entfernbar mit dem ersten Abschnitt (6) der Verbindungsleitung (8) und mit dem zweiten Abschnitt (7) der Verbindungsleitung (8) dichtend verbunden oder verbindbar ist.

4. Vorrichtung nach einem der Ansprüche 1 bis 3, **dadurch gekennzeichnet, dass** die Brücke (9) verschiebbar mit dem ersten Abschnitt (6) der Verbindungsleitung (8) und mit dem zweiten Abschnitt (7) der Verbindungsleitung (8) verbunden und insbesondere dichtend verbunden ist.

5. Vorrichtung nach Anspruch 4, **dadurch gekennzeichnet, dass** die Brücke (9) verschiebbar mit dem ersten Abschnitt (6) der Verbindungsleitung (8) und mit dem zweiten Abschnitt (7) der Verbindungsleitung (8) verbunden und insbesondere dichtend verbunden ist und dass ein Federelement (12) vorgesehen ist, das der Verschiebung der Brücke (9) entgegenwirkt.

6. Vorrichtung nach Anspruch 4 oder 5, **dadurch gekennzeichnet, dass** die verschiebbar angeordnete Brücke (9) als Druckminderer und/oder als Volumenausgleichselement wirkt und ausgebildet ist.

7. Vorrichtung nach einem der Ansprüche 4 bis 6, **dadurch gekennzeichnet,**
- **dass** die Brücke (9) dichtend verschiebbar mit dem ersten Abschnitt (6) der Verbindungsleitung (8) und mit dem zweiten Abschnitt (7) der Verbindungsleitung (8) verbunden ist,
- **dass** die Brücke (9) eine eingefahrene Stellung aufweist,
- **dass** die Brücke (9) eine ausgefahrene Stellung aufweist, in der die Brücke (9) von der eingefahrenen Stellung nach außen bewegt ist,
- und **dass** das von dem ersten Abschnitt (6) der Verbindungsleitung (8), dem zweiten Abschnitt (7) der Verbindungsleitung (8) und der Brücke (9) begrenzte oder definierte Volumen in der ausgefahrenen Stellung größer ist als in der eingefahrenen Stellung.

8. Vorrichtung nach einem der Ansprüche 1 bis 7, **dadurch gekennzeichnet,**
- **dass** zur Zuleitung (4) des Wassers in die erste lonentauschersäule (2) ein erster Verteilerkopf (13) vorgesehen ist,
- **dass** zur Ableitung (5) des Wassers aus der ersten lonentauschersäule (2) ein erster Sammelkopf (14) vorgesehen ist,
- **dass** zur Zuleitung (4) des Wassers in die zweite lonentauschersäule (3) ein zweiter Verteilerkopf (16) vorgesehen ist,
- und **dass** zur Ableitung (5) des Wassers aus der zweiten lonentauschersäule (3) ein zweiter Sammelkopf (16) vorgesehen ist.

9. Vorrichtung nach Anspruch 6, **dadurch gekennzeichnet, dass** der erste Sammelkopf (14), der zweite Sammelkopf (16), der erste Verteilerkopf (13) und der zweite Verteilerkopf (15) an der Trägerplatte (10) gehaltert, und gegebenenfalls über eine Lanze (17) an der Trägerplatte (10) gehaltert sind.

10. Vorrichtung nach einem der Ansprüche 8 oder 9, **dadurch gekennzeichnet,**
- **dass** der erste Sammelkopf (14) und der erste Verteilerkopf (13) der ersten lonentauschersäule (2) über eine erste Lanze (17) voneinander beabstandet sind und/oder
- **dass** der zweite Sammelkopf (16) und der zweite Verteilerkopf (15) der zweiten lonentauschersäule (3) über eine zweite Lanze (17) voneinander beabstandet sind.

11. Vorrichtung nach einem der Ansprüche 1 bis 10, **dadurch gekennzeichnet, dass** die Trägerplatte (10) die erste lonentauschersäule (2) und die zweite lonentauschersäule (3) mit Ausnahme der Zuleitungen (4), der Verbindungsleitung (8) und der Ableitungen (5) einseitig dichtend verschließt.

12. Vorrichtung nach einem der Ansprüche 1 bis 11, **dadurch gekennzeichnet, dass** eine Basisplatte (18) vorgesehen ist, die die erste lonentauschersäule (2) und die zweite lonentauschersäule (3) einseitig dichtend verschließt, wobei in der Basisplatte (18) verschließbare Öffnungen zur Öffnung der lonentauschersäulen (2, 3) nach außen vorgesehen sind.

13. Vorrichtung nach einem der Ansprüche 1 bis 12, **dadurch gekennzeichnet, dass** eine Abdeckung (19) zur Abdeckung der Trägerplatte (10) vorgesehen ist, wobei in der Abdeckung (19) Freistellungen zum Anschluss einer Leitung an die Zuleitung (4) und zum Anschluss einer Leitung an die Ableitung (5) vorgesehen sind.

## Claims

1. Device for desalinating water, wherein the following components are provided in a mobile housing (1):
- a first ion exchanger column (2),
- a second ion exchanger column (3),
- a supply conduit (4) for supplying the water to be desalinated, wherein the supply conduit (4) opens into the first ion exchanger column (2) and is guided to the outside of the housing (1),
- a discharge conduit (5) for discharging the desalinated water, wherein the discharge conduit (5) opens into the second ion exchanger column (3) and is guided to the outside of the housing (1),
- a first section (6) of a connecting conduit (8), wherein the first section (6) of the connecting conduit (8) opens into the first ion exchanger column (2) and is guided to the outside of the housing (1),
- and a second section (7) of the connecting conduit (8), wherein the second section (7) of the connecting conduit (8) opens into the second ion exchanger column (3) and is guided to the outside of the housing (1),
- wherein the device comprises a bridge (9) for the sealed, serial connection of the first ion exchanger column (2) to the second ion exchanger column (3), by means of which the sections (6, 7) of the connecting conduit (8) which are guided to the outside of the housing (1) are connected or can be connected fluidically, a support plate (10) being provided in which the supply conduit (4), the discharge conduit (5), the first section (6) of the connecting conduit (8) and the second section (7) of the connecting conduit (8) are extending,
**characterized in that**
the support plate (10) comprises a solid, one-piece plate body which is penetrated by channels for forming the supply conduit (4), the discharge conduit (5), the first section (6) of the connecting conduit (8) and the second section (7) of the connecting conduit (8), and **in that** the channels for forming the supply conduit (4), the discharge conduit (5), the first section (6) of the connecting conduit (8) and the second section (7) of the connecting conduit (8) are configured as boreholes and/or as cast-in conduits.

2. The device according to claim 1, **characterized in that** the supply conduit (4), the discharge conduit (5), the first section (6) of the connecting conduit (8) and the second section (7) of the connecting conduit (8) are guided side by side on one side of the support plate (10), in particular on an end face (11) of the support plate (10), to the outside of the housing (1) and emerge there from the housing (1) and from the support plate (10).

3. The device according to claim 1 or 2, **characterized in that** the bridge (9) is a removable connecting part which is removably connected or connectable to the first section (6) of the connecting conduit (8) and to the second section (7) of the connecting conduit (8) in a sealing manner.

4. The device according to one of claims 1 to 3, **characterized in that** the bridge (9) is displaceably, and in particular sealingly, connected to the first section (6) of the connecting conduit (8) and to the second section (7) of the connecting conduit (8).

5. The device according to claim 4, **characterized in that** the bridge (9) is displaceably, and in particular sealingly, connected to the first section (6) of the connecting conduit (8) and to the second section (7) of the connecting conduit (8) and **in that** a spring element (12) is provided which counteracts the displacement of the bridge (9).

6. The device according to claim 4 or 5, **characterized in that** the displaceably arranged bridge (9) acts and is configured as a pressure reducer and/or as a volume compensation element.

7. The device according to one of claims 4 to 6, **characterized**
- **in that** the bridge (9) is displaceably connected in a sealing manner to the first section (6) of the connecting conduit (8) and to the second section (7) of the connecting conduit (8),
- **in that** the bridge (9) has a retracted position,
- **in that** the bridge (9) has an extended position in which the bridge (9) is moved outwards from the retracted position,
- and **in that** the volume limited or defined by the first section (6) of the connecting conduit (8), the second section (7) of the connecting conduit (8) and the bridge (9) is greater in the extended position than in the retracted position.

8. The device according to one of claims 1 to 7, **characterized**
- **in that** a first distributor head (13) is provided for supplying (4) the water into the first ion exchanger column (2),
- **in that** a first collecting head (14) is provided for discharging (5) the water from the first ion exchanger column (2),
- **in that** a second distributor head (16) is provided for supplying (4) the water into the second ion exchanger column (3),
- and **in that** a second collecting head (16) is provided for discharging (5) the water from the second ion exchanger column (3).

9. The device according to claim 6, **characterized in that** the first collecting head (14), the second collecting head (16), the first distributor head (13) and the second distributor head (15) are mounted on the support plate (10), optionally by means of a lance (17).

10. The device according to one of claims 8 or 9, **characterized**
- **in that** the first collecting head (14) and the first distributor head (13) of the first ion exchanger column (2) are spaced apart from one another by means of a first lance (17) and/or
- **in that** the second collecting head (16) and the second distributor head (15) of the second ion exchanger column (3) are spaced apart from one another by means of a second lance (17).

11. The device according to one of claims 1 to 10, **characterized in that** the support plate (10) closes the first ion exchanger column (2) and the second ion exchanger column (3) sealingly on one side with the exception of the supply conduits (4), the connecting conduit (8) and the discharge conduits (5).

12. The device according to one of claims 1 to 11, **characterized in that** a base plate (18) is provided, which closes the first ion exchanger column (2) and the second ion exchanger column (3) sealingly on one side, wherein closable openings for opening the ion exchanger columns (2, 3) to the outside are provided in the base plate (18).

13. The device according to one of claims 1 to 12, **characterized in that** a cover (19) is provided for covering the support plate (10), wherein clearances are provided in the cover (19) for connecting a conduit to the supply conduit (4) and for connecting a conduit to the discharge conduit (5).

## Revendications

1. Dispositif de dessalement d'eau, dans lequel les composants suivants sont disposés dans un boîtier mobile (1) :
- une première colonne échangeuse d'ions (2),
- une deuxième colonne échangeuse d'ions (3),
- une conduite d'alimentation (4) pour l'alimentation de l'eau à dessaler, la conduite d'alimentation (4) s'ouvrant dans la première colonne échangeuse d'ions (2) et étant guidée jusqu'à l'extérieur du boîtier (1),
- une conduite de décharge (5) pour évacuer l'eau dessalée, la conduite de décharge (5) s'ouvrant dans la deuxième colonne échangeuse d'ions (3) et étant guidée jusqu'à l'extérieur du boîtier (1),
- une première section (6) d'une conduite de connexion (8), la première section (6) de la conduite de connexion (8) s'ouvrant dans la première colonne échangeuse d'ions (2) et étant guidée vers l'extérieur du boîtier (1),
- et une deuxième section (7) de la conduite de connexion (8), la deuxième section (7) de la conduite de connexion (8) s'ouvrant dans la deuxième colonne échangeuse d'ions (3) et étant guidée vers l'extérieur du boîtier (1),
- dans lequel le dispositif comprend un pont (9) pour la connexion série étanche de la première colonne échangeuse d'ions (2) à la deuxième colonne échangeuse d'ions (3), au moyen duquel les sections (6, 7) de la conduite de connexion (8) qui sont guidées jusqu'à l'extérieur du boîtier (1) sont reliées ou peuvent être reliées de manière fluidique, une plaque de support (10) étant disposée dans laquelle passent la conduite d'alimentation (4), la conduite de décharge (5), la première section (6) de la conduite de connexion (8) et la deuxième section (7) de la conduite de connexion (8),
**caractérisé en ce que**
la plaque de support (10) comprend un corps plat monobloc massif qui est traversé par des canaux pour former la conduite d'alimentation (4), la conduite de décharge (5), la première section (6) de la conduite de connexion (8) et la seconde section (7) de la conduite de connexion (8), et **en ce que** les canaux pour former la conduite d'alimentation (4), la conduite de décharge (5), la première section (6) de la conduite de connexion (8) et la deuxième section (7) de la conduite de connexion (8) sont réalisés sous forme de perçages et/ou de conduites coulées.

2. Dispositif selon la revendication 1, **caractérisé en ce que** la conduite d'alimentation (4), la conduite de décharge (5), la première section (6) de la conduite de connexion (8) et la deuxième section (7) de la conduite de connexion (8) sont guidées côte à côte sur une face de la plaque de support (10), en particulier une face frontale (11) de la plaque de support (10), vers l'extérieur du boîtier (1) et y sortent du boîtier (1) et de la plaque de support (10).

3. Dispositif selon la revendication 1 ou 2, **caractérisé en ce que** le pont (9) est un connecteur amovible qui est relié ou qui peut être relié de manière amovible et étanche à la première section (6) de la conduite de connexion (8) et à la deuxième section (7) de la conduite de connexion (8).

4. Dispositif selon l'une des revendications 1 à 3, **caractérisé en ce que** le pont (9) est relié de manière coulissante, et en particulier de manière étanche, à la première section (6) de la conduite de connexion (8) et à la deuxième section (7) de la conduite de connexion (8).

5. Dispositif selon la revendication 4, **caractérisé en ce que** le pont (9) est relié de manière coulissante, et en particulier de manière étanche, à la première section (6) de la conduite de connexion (8) et à la deuxième section (7) de la conduite de connexion (8) et **en ce qu'**un élément ressort (12) est prévu qui agit à l'encontre du déplacement du pont (9).

6. Dispositif selon la revendication 4 ou 5, **caractérisé en ce que** le pont (9) disposé de manière coulissante agit et est réalisé comme réducteur de pression et/ou comme élément de compensation de volume.

7. Dispositif selon l'une des revendications 4 à 6, **caractérisé**
- **en ce que** le pont (9) est relié de manière coulissante et étanche à la première section (6) de la conduite de connexion (8) et à la deuxième section (7) de la conduite de connexion (8),
- **en ce que** le pont (9) présente une position rétractée,
- **en ce que** le pont (9) présente une position déployée dans laquelle le pont (9) est déplacé depuis la position rétractée vers l'extérieur,
- et **en ce que** le volume limité ou défini par la première section (6) de la conduite de connexion (8), la deuxième section (7) de la conduite de connexion (8) et le pont (9) est plus grand en position déployée qu'en position rétractée.

8. Dispositif selon l'une des revendications 1 à 7, **caractérisé**
- **en ce qu'**une première tête distributrice (13) est prévue pour amener (4) l'eau dans la première colonne échangeuse d'ions (2),
- **en ce qu'**une première tête collectrice (14) est prévue pour évacuer (5) l'eau de la première colonne d'échangeur d'ions (2),
- **en ce qu'**une deuxième tête distributrice (16) est prévue pour amener (4) l'eau dans la deuxième colonne échangeuse d'ions (3),
- et **en ce qu'**une deuxième tête collectrice (16) est prévue pour évacuer (5) l'eau de la deuxième colonne d'échangeur d'ions (3).

9. Dispositif selon la revendication 6, **caractérisé en ce que** la première tête collectrice (14), la deuxième tête collectrice (16), la première tête distributrice (13) et la deuxième tête distributrice (15) sont montées sur la plaque de support (10) et sont éventuellement montées sur la plaque de support (10) via une lance (17).

10. Dispositif selon l'une des revendications 8 ou 9, **caractérisé**
- **en ce que** la première tête collectrice (14) et la première tête distributrice (13) de la première colonne échangeuse d'ions (2) sont espacées l'une de l'autre par une première lance (17), et/ou
- **en ce que** la deuxième tête collectrice (16) et la deuxième tête distributrice (15) de la deuxième colonne échangeuse d'ions (3) sont espacées l'une de l'autre par une deuxième lance (17).

11. Dispositif selon l'une des revendications 1 à 10, **caractérisé en ce que** la plaque de support (10) ferme de manière étanche la première colonne échangeuse d'ions (2) et la deuxième colonne échangeuse d'ions (3) d'un côté, à l'exception des conduites d'alimentation (4), de la conduite de connexion (8) et des conduites de décharge (5).

12. Dispositif selon l'une des revendications 1 à 11, **caractérisé en ce qu'**il est prévu une plaque de base (18) qui ferme de manière étanche la première colonne échangeuse d'ions (2) et la deuxième colonne échangeuse d'ions (3) d'un côté, dans lequel des ouvertures pouvant être fermées pour ouvrir les colonnes d'échangeur d'ions (2, 3) vers l'extérieur sont prévues dans la plaque de base (18).

13. Dispositif selon l'une des revendications 1 à 12, **caractérisé en ce qu'**un couvercle (19) est prévu pour recouvrir la plaque de support (10), dans lequel le couvercle (19) présente des espaces pour relier une conduite à la conduite d'alimentation (4) et pour relier une conduite à la conduite de décharge (5).
